# EUROPEAN PATENT SPECIFICATION

(11) **EP 2 479 250 B1**
(45) Date of publication and mention of the grant of the patent: **12.08.2015**
(21) Application number: 10847204.4
(22) Date of filing: 16.03.2010
(51) Int. Cl.: C11C 3/10, C11C 3/04, C11B 1/10, C11B 3/10, C11B 3/12

(54) **BIODIESEL AND PREPARATION METHOD THEREOF**
BIODIESEL UND HERSTELLUNGSVERFAHREN DAFÜR
BIODIESEL ET SON PROCÉDÉ DE PRÉPARATION

(30) Priority: 08.03.2010 CN 201010122837; 08.03.2010 CN 201010122823
(43) Date of publication of application: 25.07.2012
(73) Proprietor: Sun Yat-Sen University, Guangdong 510275 (CN)
(72) Inventor: YANG, Depo, Guangzhou Guangdong 510275 (CN); HUANG, Miaoling, Guangzhou Guangdong 510275 (CN); LIANG, Dong, Guangzhou Guangdong 510275 (CN); LI, Zhuoxue, Guangzhou Guangdong 510275 (CN); YANG, Wenzhe, Guangzhou Guangdong 510275 (CN)
(74) Representative: Harris, Jennifer Lucy
(86) International application number: PCT/CN2010/071076
(87) International publication number: WO 2011/109945

(56) References cited:
- EP-A1- 2 479 250
- WO-A1-2007/141362
- WO-A1-2007/141362
- CN-A- 100 999 681
- CN-A- 101 120 701
- CN-A- 101 120 701
- CN-A- 101 445 742
- FENG,ZHONGMIN ET AL.: 'Biomass energy industry and the prospect analysis in our country.' THEORY AND PRACTICE OF CIRCULAR ECONOMY. 2006, pages 537 - 538, XP008150575
- VASUDEVAN PALLIGARNAI T. ET AL.: 'Biodiesel production-current state of the art and challenges.' J.IND. MICROBIOL. BIOTECHNOL. vol. 35, 2008, pages 421 - 430, XP019596313
- WU, WEIGUANG ET AL.: 'Biodiesel development: current status, potential impacts and perspectives.' TRANSACTIONS OF THE CSAE. vol. 25, no. 3, March 2009, pages 298 - 302, XP008150619

## Description

### FIELD OF THE INVENTION

The present invention relates to the field of renewable energy sources, particularly, to biodiesel and a method for preparing the same.

### BACKGROUND OF THE INVENTION

Biodiesel, also known as biochemical diesel, refers to the long-chain fatty acid methyl esters or ethyl esters synthesized from transesterification process of materials including vegetable oil, such as oil plants and engineering microalgae, animal fats, waste cooking oil, etc. Besides those similar to petroleum diesel, biodiesel also has sustained renewability and excellent environmental protection, and contains high oxygen content, no sulfur and aromatic hydrocarbons, a reduced amount of carbon monoxide, sulfur dioxide and sulfide in combustion emissions. Furthermore, the biodiesel is significantly higher in degradability than petroleum diesel.

At the present time, materials used for preparing biodiesel mainly include vegetable oil, such as peanut oil, soybean oil, rapeseed oil, coconut oil, palm oil, and jatropha oil, engineering algae oil, waste cooking oil, and animal oil, such as waste lard, fish oil, etc. However, there are some disadvantages in preparing biodiesel with the materials described above. On one hand, it competes for materials with the production of edible oil, which squeezes the farming space of foodgrain, and exacerbates the food shortage of our country. On the other hand, the materials, like peanut oil and soybean oil, are expensive in themselves, which will make the cost for producing biodiesel become high accordingly. According to statistics, materials cost occupies 75% of the costs of biodiesel production. Therefore, the crucial problem for realizing the industrialization of biodiesel is to look for new, cheap materials so as to reduce the costs of production.

The present invention relates to a method for preparing biodiesel with oil from larvae and pupae of the complete metamorphosis insects. Here, the insects includes, for example, larvae and pupae of the superworms, larvae and pupae of the yellow mealworms, larvae and pupae of the moths, larvae and pupae of the flies, etc. Insects are divided into two categories: incomplete metamorphosis insects and complete metamorphosis insects. The life history of the complete metamorphosis insect is comprised of four stages: egg, larva, pupa, and adult, that is, an egg is hatched into a larva, which then becomes a pupa after a series of molting processes and other small changes, and finally becomes an adult insect. The present patent application relates to the use of the oil extracted from larvae and pupae of the complete metamorphosis insects for preparing biodiesel and the relevant production process. The feeding operation of the complete metamorphosis insects is very simple, and there are a variety of culture mediums, and the cost is very low. Fly is a typical complete metamorphosis insect, and fly maggot is the larva of the fly belonging to the families of the sub-order Cyclorrhapha. A physiological characteristic of the fly is that, it is able to lay eggs for a lifetime after once mating, the reproductive capability of the fly is very strong, and its whole life cycle is 28 days. A female fly can lay eggs 5-6 times during its lifetime, and each time for around 100-150 eggs; from egg to insect, it only needs 3-4 days, and the female fly is able to breed 10-12 generations of insects in one year. The breeding of fly maggots is low in cost, easy to operate and only needs simple devices. The breeding can be carried out indoors or outdoors with a variety of inexpensive mediums, such as agricultural scraps like wheat bran, rice bran, distillers grains and soybean dregs, dung, etc. At present, the large-scale maggots breeding technique has matured, and the breeding has been mechanized and scaled up in developed countries like USA. If biodiesel is produced from a huge amount of cheap maggot oil, the production cost will be significantly reduced. According to the insect taxonomy, both the superworms (*Zophobas spp.*) and the yellow mealworms (*Tenebrio spp.*) belong to the order Coleoptera, and it takes about more than three months from egg incubation to emergence of the adult. The superworm larva is cylindrical in shape, and has a length of about 7 centimeters and a width of 0.5 centimeter, which is 3-4 times as big as the larva of a yellow mealworm. Both kinds of larvae are rich in protein (40%-50%), fat (30%-40%) and other nutrients, and usually used as excellent food for breeding rare animals, such as many varieties of arowana, pet bird, turtle, snake, etc. Moth is also a typical complete metamorphosis insect; it belongs to the order Lepidoptera and is the largest group in the order, accounted for 90% of the Lepidoptera species. The moth includes species belonging to family Gelechiidae, family Noctuidae, family Saturniidae, family Hepialidae, etc., and their individual development goes through the following four stages: egg, larva, pupa, and adult, and lasts for more than one month. The fat content of the moth larva is very high, wherein the crud fat content of the moth larva of Hepialidae is up to 77.16%. Silkworm (*Antheraea spp*.) is the larva of silkworm moth in the family Saturniidae of order Lepidoptera; the fat content in the dried silkworm is up to more than 30%; silkworm pupa is edible, and the residue can be used as feedstuff of fish, livestock and poultry. Honey Bee (*Apis spp.*) belongs to family Apidae of order Hymenoptera, and their individual development also goes through four stages; queen bee lays its eggs in the beehive, which eggs then hatched into larvae, and after 7 days of development, the bee enter the pupal stage, at this point, the body of the bee is honeybee pupae which is rich in protein and fat. Domestic and foreign developments and applications of the bees are mainly focused on health products and foods, such as royal jelly, honey, bee pollen, etc.

Insects are rich in fat. Many fresh insects have a fat content of 10%-20%, while dried insect products have a fat content of 20%-50%. According to research, factors affecting the fat content of the insects mainly includes the following three aspects: i) insect species, insects of different species have different fat contents; ii) among the same specie of insects, fat contents in pupae, larvae and insects in winter are higher than others; iii) changes in the life history of insects also lead to different fat contents; direct or indirect effects of hormones or neurohormones bring out the changes of metabolic balance between the synthesis and utilization of fats; and processes like growth, migration, diapause, reproduction, fight, etc., also have an impact on the metabolism of the fats. Since most of the insects high in fat belong to complete metamorphosis insects, the present application relates to the preparation of biodiesel with using fats from larvae and pupae of complete metamorphosis insects of class Insecta as materials, which insects have relatively high level of fat, short growth cycle and strong ability of propagation.

The fats and oils of insects have different characteristics with vegetable fats and oils, the latter are easy to be extracted, since they exist in vegetable oil cells or in fee state such as oil drops. The fats and oils of insects exist in three forms as flowing: the first form is , Van der Waals bonds or hydrophobic bonds of the hydrocarbyl groups of monoesters such as glyceryl ester and cholesterol ester bind with hydrophobic bonds of other lipids and proteins, wherein fat, albumin and fatty acid complex in the adipose tissue exist in this way; the second form is, polar lipids such as phospholipids and cholesterol existing in living body membranes such as shaped plasma membranes, mitochondrias and endoplasmic reticulums, and serum-nuclear protein complexes, always bind with proteins so as to form hydrogen hydrogen bonds, ionic bonds and hydrophobic bonds; the third form is, just like in the fatty acids, hydroxyl fatty acids and fatty acids with complex branched chains, existing as covalent bonds such as ester bonds, amide bonds, glycosidic bonds, etc. The extracting method for the fat of insects mainly depends on the state of existence and solubility of the fat, and its combination mode with other ingredients, in the above-described organism. In addition, due to the existence of lipase in the insects, which lipase leads to the hydrolysis of the fat and then the production of a large amount of unsaturated fatty acids, and also due to the effect of the oxygen in the air, it's easier when in the same state for the fat of insects to become rancidity than vegetable oil, which results in the rising of acid value and further affects the subsequent reaction for preparing biodiesel. The fat of insects is rich in unsaturated fatty acids, wherein the ratio of saturated fatty acids to unsaturated ones is less than 0.4, which is some similar to the fatty acids constitution of fish oil. The saturated fatty acids of insects are mainly palmitic acid (C16:0); as for other fatty acids therein, stearic acid (C18:0) is in a lower level, and most of monounsaturated fatty acids are absolutely composed of oleic acid (C18:1n-9) with the content of about (30±10)% in most cases. Some insects contain more unsaturated fatty acids, in which linoleic acid (C18:2n-6) and α-linolenic acid (C18:3n-3) are more prominent. The fat of insects contains some odd-carbon fatty acids which are rare in nature and appear most of the time as pentadecyclic acid and heptadecanoic acid. The odd-carbon fatty acids possess unique physiological activities such as great anticancer activity. Insects of the order Coleoptera have high levels of Linoleic acid, while insects of the order Lepidoptera have high levels of linolenic acid. Research shows that the fatty acids constitution of insect oil has some connection to factors such as species, growth and development, nutritional status, environment or feedstuff, etc.

### SUMMARY OF THE INVENTION

It is a first object of the present invention is to provide new materials for producing biodiesel and a method for preparing the biodiesel, which is low in the costs of production, renewable in the materials, etc.

To achieve the above object, the following technical solution is provided:
A method for preparing biodiesel, wherein it includes the following steps:
   (1) insect oil preparation: after larvae and/or pupae of the complete metamorphosis insects are dried and crushed, adding a solvent which has a weight equivalent to 1-10 times the weight of the larvae and/or pupae, extracting for 1-48 hours at room temperature and then filtering to obtain Extract I; recovering the solvent from the filtrate to obtain a low-acid-value insect oil with an acid value less than or equal to 2, or a high-acid-value insect oil with an acid value greater than 2; when the high-acid-value insect oil is obtained, pre-esterifying the high-acid-value insect oil to obtain the low-acid-value insect oil with an acid value less than or equal to 2, under the pre-esterifying condition: the molar ratio of the high-acid-value insect oil to methanol or ethanol is 1:6 - 1:13, the weight of acidic catalyst is 0.5% - 5% of the weight of the insect oil, the reaction temperature is 40°C - 90°C, and the reaction time is 0.5 - 4 hours;
   (2) transesterification: conducting transesterification of low-acid-value insect oil with methanol or ethanol by the following condition: the molar ratio of the low-acid-value insect oil to methanol or ethanol is 1:4 - 1:9, a basic catalyst with a weight equivalent to 0.5% - 2.5% of the insect oil weight is added, the reaction temperature is 40°C - 90°C, and the reaction time is 10-60 minutes;
   (3) phase separation: when transesterification is completed, standing the reactant for stratifying it into a supernatant liquid that is coarse ester and an subnatant liquid comprising glycerin, water, methanol or ethanol, catalyst, etc., neutralizing the subnatant liquid with the dilute hydrochloric acid and then conducting centrifugal separation and vacuum distillation to obtain the by-product glycerin;
   (4) refining process: washing the supernatant liquid from step (3) with hot water for 2-3 times, adding an adsorbent with a weight equivalent to 1% - 10% of the liquid weight, heating to 30°C-100°C, stirring for 10-60 minutes, and then conducting suction filtration to obtain the filtrate which is the product biodiesel; eluting the filter cake with ethyl acetate, then recovering the solvent from the eluate to obtain Extract II; or
   after washing the supernatant liquid from step (3) with water, putting it into a refrigerator (or icehouse) with a temperature of 0°C-10°C for cooling it for 24-120 hours, then after suction filtration, obtaining the filter cake as Extract IV and the filtrate as biodiesel; or, after refining, processing the supernatant liquid from step (3) with molecular distillation technique under the following conditions: a vacuum of 10-0.1Pa and a distillation temperature of 100-200°C, separating biodiesel therefrom; and also, the reactants can be refined and processed directly by the molecular distillation technique which consists of two stages: I. separating out glycerin and methanol (or ethanol) from the reactants by molecular distillation with processing conditions of a vacuum of 100-10Pa and a distillation temperature of 80-160°C, II. Separating out biodiesel by molecular distillation with processing conditions of a vacuum of 10-0.1Pa and a distillation temperature of 100-200°C; or three stages: I. separating out methanol or ethanol by molecular distillation with processing conditions of a vacuum of 5000-100Pa and a distillation temperature of 60-150°C, II. Separating out glycerin by molecular distillation with processing conditions of a vacuum of 100-10Pa and a distillation temperature of 100-200°C, III. separating out biodiesel by molecular distillation with processing conditions of a vacuum of 10-0.1Pa and a distillation temperature of 100-200°C, and obtaining the unsaponifable distillation residue, i.e. Extract III.

In the above step (1), the solvent is single organic solvent or compound organic solvent which is any one selected from the group consisted of a single lipophilic organic solvent, and a mixture of a lipophilic organic solvent / lipophilic organic solvents and a hydrophilic organic solvent/ hydrophilic organic solvents, wherein the lipophilic organic solvents includes, but not limited to, n-hexane, cyclohexane, petroleum ether, ethyl ether, ethyl acetate, chloroform and benzene; and the hydrophilic organic solvents includes, but not limited to, methanol, ethanol, propanol and acetone.

In the above step (1), the complete metamorphosis insect can be a fly, a yellow mealworm, a superworm, a silkworm, a bee, or a moth, etc.

In the above step (1), the acidic catalyst is concentrated sulfuric acid or p-toluene sulfuric acid.

In the above step (1), the extracting at room temperature is preferably conducted under nitrogen atmosphere. However, the extracting at room temperature can also be conducted without the nitrogen atmosphere.

In the above step (2), the basic catalyst can be NaOH, KOH, sodium alkoxide or alkli metal; if using NaOH or KOH as catalyst, the catalyst in solid state is firstly dissolved in methanol or ethanol to obtain an alcohol solution with a concentration of 4-8wt%.

In the above step (4), the adsorbent includes, but not limited to, one or more of the following: activated clay, diatomite, attapulgite, activated carbon, magnesium silicate, and alumina.

In the above step (1), the Extract I was analyzed and identified as a crude protein mixture, which can be used as feedstuff or materials for producing chitosan. In the above step (4), the Extract II, Extract III and Extract IV were analyzed and identified as phospholipid, sterol, pigment and other ingredients, which can be used in chemical engineering, pharmaceutical, cosmetics and other fields.

It is herein described the provision of a kind of biodiesel. The biodiesel is produced by the above-described method.

The method for preparing biodiesel according to the present invention uses insect oils extracted from larvae and/or pupae of the complete metamorphosis insects as raw materials to prepare biodiesel, so that sources of the raw materials are in a wide range and the farming cost is very low.

The contents and constituents of insect oils are various depending on the species, growth environments, nutritional statuses and culture conditions of the insects. Therefore, the biodiesel produced by the technology of the present invention may be different in its constituent as listed in Table 1:

**Table 1: Analysis on the constituents of insect biodiesel and the relative contents thereof**

| Relative contents of fatty acids (%) | Saturated fatty acid methyl esters / ethyl esters | | | | | Unsaturated fatty acid methyl esters / ethyl esters | | | |
|---|---|---|---|---|---|---|---|---|---|
| | C14:0 | C15:0 | C16:0 | C17:0 | C18:0 | C16:1 | C18:1 | C18:2 | C18:3 |
| fly maggot | 2.5±0.75 | 0.82±0.25 | 31.18±9.35 | / | 3.39±1.02 | 15.15±4.54 | 21.98±.6.60 | 23.81±7.14 | / |
| Fly pupa | 0.85±0.26 | 3.41±1.02 | 29.91±8.97 | / | 3.43±1.03 | 9.45±2.84 | 23.7±7.11 | 23.89±7.17 | 2.5±0.75 |
| Superworm larva | 1.13±0.34 | 0.34±0.10 | 27.07±8.12 | 0.92±0.28 | 8.9±2.67 | 3.15±0.95 | 40.24±12.07 | 16.42±4.93 | / |
| Yellow meal worm larva | 3.26±0.98 | 0.39±0.12 | 14.19±4.26 | / | 1.69±0.51 | 3.39±1.02 | 43.26±12.98 | 32.68±9.80 | / |
| Bee pupa | 2.64±0.79 | 0.13±0.04 | 35.14±10.55 | / | 13.82±4.15 | 3.67±1.10 | 40.27±12.09 | 0.35±0.10 | 1.43±0.43 |
| Moth larva | 1.01±0.30 | 0.12±0.04 | 13.29±3.99 | / | 1.03±0.01 | 4.88±1.47 | 32.06±9.62 | 12.25±3.68 | 33.46±10.04 |
| Moth pupa | 0.92±0.28 | 0.05±0.02 | 19.02±5.71 | / | 0.91±0.27 | 6.17±1.85 | 30.11±9.03 | 9.23±2.77 | 31.75±952 |
| Silkworm larva | 0.22±0.07 | 0.21±0.05 | 30.43±9.13 | 0.31±0.09 | 6.67±2.00 | 0.24±0.07 | 34.45±10.33 | 4.25±1.28 | 21.41±6.42 |
| Silkworm pupa | 0.35±0.10 | 0.42±0.13 | 27.76±8.34 | 0.48±0.14 | 1.6±0.48 | 4.05±1.21 | 21.72±6.52 | 12.08±3.62 | 28.76±8.63 |

The insect oils according to the present invention are oily liquids extracted from larvae and/or pupae of complete metamorphosis insects by, for example, solvent process. The major components of the insect oils are saturated fatty acids and unsaturated fatty acids, like fly maggot oil, fly pupa oil, superworm oil, yellow mealworm oil, moth pupa oil, silkworm oil, silkworm pupa oil, etc. The method which uses insect oil to produce biodiesel is different from the traditional method which uses vegetable oil to be transformed into biediesel, for example:
(1) The present invention uses single organic solvent or compound organic solvent such as ethanol-ethyl ether to break oil-binding bonds in the insects to extract all lipid, and at the same time, to destroy the activity of lipases in the insects and inhibit the increasing of the acid value. The present invention studies the extracting process with nitrogen protection and without nitrogen protection. The oxidation of the insect oils can be better prevented under the nitrogen protection.
(2) By using the extracted insect oil as raw material, one can obtain fatty acid alkyl ester and mixture of fatty acid alkyl esters by fatty acid transesterification or pre-esterifying-transesterification reaction; wherein the mixture contains some water and fatty acid unsaponifable matters, such as phospholipid, sterol, pigment and other ingredients, so that the total material after the reaction is called as crude biodiesel. When there is water existing, fatty acid methyl ester or ethyl ester will hydrolyze to the corresponding free fatty acids respectively, which leads to the increasing of the acid value of biodiesel and directly affects the quality of the product; and during the combustion process of the product, ash content (precipitation) will occur and then attach to or even block the fuel filter (device) or the oil pipeline. Thus, post-processing of biodiesel for refining is necessary. The adsorbent refers to a solid substance which is able to effectively absorb certain components in gas or liquid by intermolecular force (van der Waals force), chemical bond generated by chemical reaction, and/or ion-exchange action between the adsorbent and the said certain components. Commonly used adsorbents include activated carbon, diatomite, attapulgite, activated clay, silica gel, zeolite, wooden meal, furnace slag, humic acid, etc. Due to the high adsorption capacity brought by its high specific surface area, the activated carbon is one of the most commonly used adsorbent. The objective of using adsorbent is to achieve deep purification, for example, to remove a small amount of heavy metal ions, to remove harmful bio-degradable organic matters, and to bleach and deodorize. The crude biodiesel obtained after the adsorption operation can be further processed by freezing (low temperature) separation technology to realize a more complete edulcoration of the product. The freezing separation technology refers to a technology which separates different substances in a certain low temperature range by using their different freezing points; and it has the advantages of no solvent contamination, simple operation, low cost, higher separation efficiency, etc.
(3) The present invention uses molecular distillation, which is a new liquid-liquid separation technology also known as short-path distillation. The working principle of molecular distillation is that: under high vacuum, depending the differences of mean free paths of molecular motions of the mixture, separating the mixture's molecules under a temperature far below their boiling points. Molecular distillation has advantages over conventional distillation, e.g., high separating efficiency, high product yield, and good quality of products brought by the low heating temperature and short processing time. The technical solution of the present invention uses the adsorption clarification technique and the molecular distillation technique or combination thereof to remove by-products, catalysts and impurities not participating the reaction, and obtain reliable biodiesel product with steady quality accordingly.
(4) In addition, the major by-product produced during the preparing procedure of biodiesel is crude glycerol, the yield of which can indicate the conversion rate of biodiesel. High-purity glycerol is widely used in fine chemicals, food, medicine and other fields. On the other hand, it is another object of the present invention to reduce the production cost of biodiesel by improving the added value of product through increasing the comprehensive utilization rate of glycerol. Other than glycerol, the method of present invention can obtain other by-products, such as Extract I (crude protein mixture) which can be used as feedstuff or raw materials for producing chitosan, Extract II, III and IV (phospholipid, sterol, pigment, etc.) which can be used in chemical, pharmaceutical, cosmetics and other fields.

### BRIEF DESCRIPTION OF THE DRAWINGS

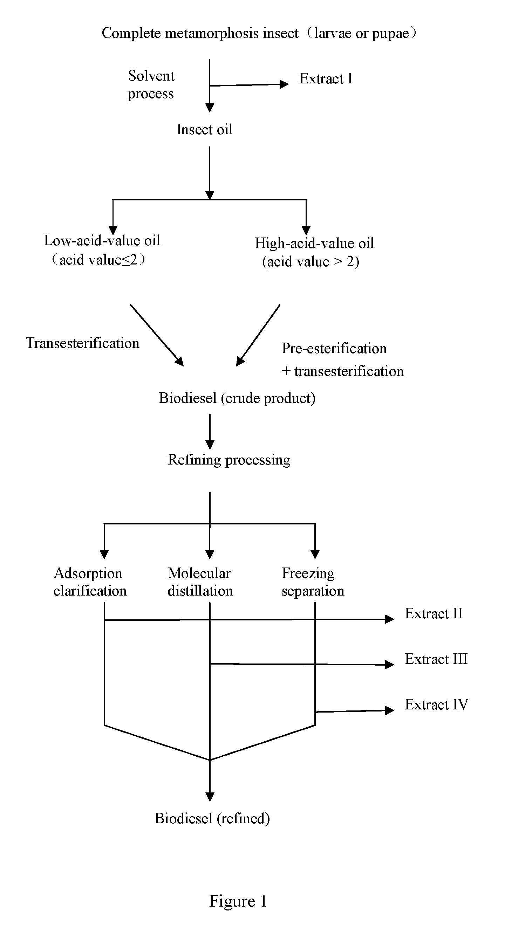

Figure 1 is a flow chart illustrating a preparation method of the present invention.

### DETAILED DESCRIPTION OF THE PREFERED EMBODIMENTS

The present invention extracts insect oil from raw materials of larvae or pupae of complete metamorphosis insects with or without nitrogen protection by using solvent, wherein crude biodiesel is obtained by conducting transesterification or pre-esterifying-transesterification reaction and then phase separation on the resulted insect oil with a low acid value (acid value <=2) or high acid value (acid value >2) respectively, and the refined biodiesel is achieved by conducting adsorption clarification technique, molecular distillation technic or freezing (low temperature) separation technique on the crude biodiesel for purification, as shown in Fig. 1. The composition of biodiesel obtained is shown in Table 1, wherein the insect refers to a larva or pupa of a complete metamorphosis insect, collected from various types of artificial farms, research establishments, etc.

Detailed description of the present invention will be presented by specific embodiments in the following.

### Example 1

In this example, the preparation method of biodiesel includes the steps as follows.

The fly maggots, collected from Guangzhou flowers and birds market, were washed by water, processed by limewater, dried at 90°C, crushed, added to petroleum ether of 10 times as heavy as the maggots, extracted at room temperature for 48 hour under nitrogen atmosphere, and filtered to get the Extract I which can be directly used as feedstuff, or as the raw material for producing chitosan (it is the same in the following examples). The filtrate was evaporated under reduced pressure to recover the solvent and to get fly maggot oil (insect oil) with low acid value.

The obtained fly maggot oil was mixed up with methanol at a molar ratio of 1: 9. A mixture of the obtained oil and NaOH with a weight of 2.5% of the oil (before adding, the solid NaOH should be dissolve in the alcohol to obtain an alcohol solution of 4~8wt%; it is the same in the following examples) was heating refluxed at 90°C for 10 minutes and then stood for stratification. The subnatant liquid was neutralized by dilute hydrochloric acid, centrifuged, and evaporated under reduced pressure to get a by-product - glycerol. The supernatant liquid was washed with hot water for 2 to 3 times, added to activated clay with a weight of 10% of the supernatant liquid, heated to 100°C, stirred for 10min, and then suction filtered. The filter cake was eluted with ethyl acetate to get eluate from which the solvent was recovered to obtain Extract II. The Extract II was analyzed and identified as including phospholipid, sterol and pigment, and can be used in chemical engineering, pharmaceutical, cosmetics and other fields (it is the same in the following examples). The filtrate was the product, biodiesel.

### Example 2

The preparation method of biodiesel according to this example includes the steps as follows.

The fly maggots, collected from junkyard, were cleaned, then processed by hot water, dried at 60°C, and crushed. After adding n-hexane as heavy as the maggots, the resulted mixture was extracted for 24 hours under the protection of nitrogen at room temperature. Then conducting filtering, and the filtrate was got rid of solvent by vacuum distillation to yield fly maggot oil with low acid value.

The obtained fly maggot oil was mixed up with methanol at 1: 6 molar ratio, adding KOH of 2.5% of the oil weight, and heating refluxing for 30min at 60°C, following by standing and stratifying. The supernatant liquid was refined by molecular distillation technology under the conditions of a vacuum of 10Pa and a distillation temperature of 200°C, then separating biodiesel therefrom. The residue was unsaponifiable matter, that is, Extract III. The Extract III was analyzed and identified as including phospholipid, sterol and pigment, and can be used in chemical engineering, pharmaceutical, cosmetics and other fields (it is the same in the following examples).

### Example 3

The preparation method of biodiesel according to this example includes the steps as follows.

The fly maggots, collected from rural households in Panyu District, Guangzhou, were cleaned, processed by hot water, naturally dried, crushed, added to petroleum ether-ethyl acetate-propanol of 3 times as heavy as the maggots, extracted at room temperature for 36 hours, and then filtered. The filtrate was evaporated under reduced pressure to recover the solvent and to get fly maggot oil with high acid value. A mixture of the obtained oil and methanol at a molar ratio of 1:13 was heating refluxed at 70°C, added to p-toluene sulfonic acid with a weight of 4% of the oil, and stirred. Then, after reaction for 3 hours, fly maggot oil with low acid value was obtained.

The obtained fly maggot oil was mixed with methanol at a molar ratio of 1:7. The resulted mixture was then added to sodium methoxide with a weight of 0.5% of the oil, heating refluxed at 65°C for 40min, and then stood for stratification. The subnatant liquid was neutralized by dilute hydrochloric acid, centrifuged, and evaporated under reduced pressure to get a by-product - glycerol. The supernatant liquid was washed 2-3 times with hot water, cooled, held in refrigerator of 0°C for 24 hours, and then suction filtered to get the filter cake as Extract IV The Extract IV was analyzed and identified as including phospholipid, sterol and pigment, and can be used in chemical engineering, pharmaceutical, cosmetics and other fields (it is the same in the following examples). The filtrate was the product, biodiesel.

### Example 4

The preparation method of biodiesel according to this example includes the steps as follows.

The fly pupae, collected from Institute of Entomology, Sun Yat-sen University, were cleaned, processed by limewater, naturally dried, crushed, added to n-hexane-methanol of 5 times as heavy as the pupae, extracted at room temperature for 2 hours, and then filtered. The filtrate was evaporated under reduced pressure to recover the solvent and to obtain fly pupa oil with high acid value. A mixture of the obtained oil and methanol mixed at a molar ratio of 1:9 was heating refluxed at 50°C, added to concentrated sulfuric acid with a weight of 2% of the oil, and stirred. Then, after reaction for 2.5 hours, fly pupa oil with low acid value was obtained.

The obtained fly pupa oil was mixed with methanol at a molar ratio of 1:5. The resulted mixture was then added to KOH with a weight of 2.5% of the oil, heating refluxed at 50°C for 50min, and then stood for stratification. The subnatant liquid was neutralized by dilute hydrochloric acid, centrifuged, and evaporated under reduced pressure to get a by-product - glycerol. The supernatant liquid was washed 2-3 times with hot water, cooled, held in a refrigerator of 10°C for 120 hours, and then suction filtered to obtain the filtrate as the product, biodiesel.

### Example 5

The preparation method of biodiesel according to this example includes the steps as follows.

The fly maggots, collected from rural households in Panyu District, Guangzhou, were cleaned, processed by hot water, naturally dried, crushed, added to petroleum ether-ethyl acetate-propanol of 3 times as heavy as the maggots, extracted at room temperature for 36 hours, and then filtered. The filtrate was evaporated under reduced pressure to recover the solvent and to get fly maggot oil with high acid value. A mixture of the obtained oil and methanol mixed at a molar ratio of 1:13 was heating refluxed at 70°C, added to p-toluene sulfonic acid with a weight of 4% of the oil, and stirred. Then, after reaction for 3 hours, fly maggot oil with low acid value was obtained.

The obtained fly maggot oil was mixed with methanol at a molar ratio of 1:7. The resulted mixture was then added to sodium methoxide with a weight of 0.5% of the oil, heating refluxed at 65°C for 40min, and then stood for stratification. The subnatant liquid was neutralized by dilute hydrochloric acid, centrifuged, and evaporated under reduced pressure to get a by-product - glycerol. While the supernatant liquid was washed 2-3 times with hot water, added to magnesium silicate-activated carbon with a weight of 5% of the liquid, heated to 85°C, stirred for 40min, and then suction filtered to get the filtrate as the product, biodiesel.

### Example 6

The preparation method of biodiesel according to this example includes the steps as follows.

The fly maggots, collected from a pig farm of Guangdong Province, were processed by limewater, dried at 90°C, crushed, added to ethyl ether-ethanol of 10 times as heavy as the maggots, extracted at room temperature for 30 hours, and then filtered. The filtrate was evaporated under reduced pressure to recover the solvent and to get fly maggot oil with high acid value. A mixture of the obtained oil and ethanol mixed at a molar ratio of 1:10 was heating refluxed at 70°C, added to p-toluene sulfonic acid with a weight of 5% of the oil, and then stirred. After 0.5 hours reaction, the resulted mixture was evaporated under atmospheric pressure to recover ethanol, and then stood for stratification. Finally, the subnatant liquid, i.e. fly maggot oil with low acid value, was poured out.

The obtained fly maggot oil with low acid value was mixed with ethanol at a molar ratio of 1:6. The resulted mixture was then added to KOH with a weight of 1.5% of the oil, heating refluxed at 80°C for 30min, and then molecularly distilled for the separation and purification of the reactant. The molecular distillation procedure consisted of two stages, wherein the first stage of the molecular distillation has the processing conditions of a vacuum of 10Pa and a distillation temperature of 80°C, glycerol and ethanol were separated out in this stage; the second stage of the molecular distillation has the processing conditions of a vacuum of 0.1Pa and a distillation temperature of 110°C, and biodiesel was separated out in this stage.

### Example 7

The preparation method of biodiesel according to this example includes the steps as follows.

The fly maggots, collected from Institute of Entomology, Sun Yat-sen University, were cleaned, processed by limewater, naturally dried, crushed, added to chloroform-methanol of 8 times as heavy as the maggots, extracted at room temperature for 5 hours, and then filtered. The filtrate was evaporated under reduced pressure to recover the solvent and to get fly maggot oil with high acid value. A mixture of the obtained oil and methanol mixed at a molar ratio of 1:10 was heating refluxed at 60°C, added to concentrated sulfuric acid with a weight of 2% of the oil, and stirred. Then, after 3 hours reaction, fly maggot oil with low acid value was obtained.

The obtained fly maggot oil was mixed with methanol at a molar ratio of 1:7. The resulted mixture was then added to NaOH with a weight of 2.5% of the oil, heating refluxed at 60°C for 10min, and then molecularly distilled for the separation and purification of the reactant. The molecular distillation procedure consisted of three stages, wherein the first stage of the molecular distillation has the processing conditions of a vacuum of 100Pa and a distillation temperature of 60°C; the second stage of the molecular distillation has the processing conditions of a vacuum of 100Pa and a distillation temperature of 200°C, in this stage glycerol was separated out; and the third stage of the molecular distillation has the processing conditions of a vacuum of 10Pa and a distillation temperature of 200°C, and biodiesel was separated out in this stage.

### Example 8

The preparation method of biodiesel according to this example includes the steps as follows.

The fly maggots, collected from rural households in Panyu District, Guangzhou, were processed by limewater, dried at 90°C, crushed, added to ethyl ether-ethanol of 10 times as heavy as the maggots, extracted at room temperature for 30 hours, and then filtered. The filtrate was evaporated under reduced pressure to recover the solvent and to get fly maggot oil with high acid value. A mixture of the obtained oil and ethanol mixed at a molar ratio of 1:10 was heating refluxed at 70°C, added to p-toluene sulfonic acid with a weight of 5% of the oil, and then stirred. After 0.5 hours reaction, the resulted mixture was evaporated under atmospheric pressure to recover ethanol, and then stood for stratification. Finally, the subnatant liquid, i.e. fly maggot oil with low acid value, was poured out.

The obtained fly maggot oil was mixed with ethanol at a molar ratio of 1:6. The resulted mixture was then added to NaOH with a weight of 2% of the oil, heating refluxed at 80°C for 30min, and then molecularly distilled for the separation and purification of the reactant. The molecular distillation procedure consisted of two stages, wherein the first stage of the molecular distillation has the processing conditions of a vacuum of 30Pa and a distillation temperature of 110°C, glycerol and ethanol were separated out in this stage; the second stage of the molecular distillation has the processing conditions of a vacuum of 0.1Pa and a distillation temperature of 100°C, and biodiesel was separated out in this stage.

### Example 9

The preparation method of biodiesel according to this example includes the steps as follows.

The fly pupae, collected from a chicken farm of a rural household in Panyu District, Guangzhou, were cleaned, processed by limewater, dried at 40°C, crushed, added to petroleum ether as heavy as the pupae, extracted at room temperature for 10 hours under nitrogen atmosphere, and then filtered. The filtrate was evaporated under reduced pressure to recover the solvent and to get fly pupa oil with low acid value.

The obtained fly pupa oil was mixed with methanol at a molar ratio of 1:5. The resulted mixture was then added to NaOH with a weight of 1.5% of the oil, heating refluxed at 40°C for 60min, and then stood for stratification. The subnatant liquid was refined by molecular distillation technology with processing conditions of a vacuum of 0.1Pa and a distillation temperature of 110°C to separate out biodiesel.

### Example 10

The preparation method of biodiesel according to this example includes the steps as follows.

Dry fly pupae, collected from Institute of Entomology, Sun Yat-sen University, were crushed, added to cyclohexane-acetone of 5 times as heavy as the pupae, extracted at room temperature for 2 hours, and then filtered. The filtrate was evaporated under reduced pressure to recover the solvent and to get fly pupa oil with high acid value. A mixture of the obtained oil and methanol mixed at a molar ratio of 1:9 was heating refluxed at 50°C, added to concentrated sulfuric acid with a weight of 2% of the oil, and stirred. Then, after 2.5 hours reaction, fly pupa oil with low acid value was obtained.

The obtained fly pupa oil with low acid value was mixed with methanol at a molar ratio of 1:5. The resulted mixture was then added to KOH with a weight of 2.5% of the oil, heating refluxed at 50°C for 50min, and then stood for stratification. The subnatant liquid was neutralized by dilute hydrochloric acid, centrifuged, and evaporated under reduced pressure to get a by-product glycerol. The supernatant liquid was washed for 2-3 times with hot water, added to diatomite with a weight of 7% of the liquid, heated to 60°C, stirred for 30min, and then suction filtered to obtain the filtrate as the product, biodiesel.

### Example 11

The preparation method of biodiesel according to this example includes the steps as follows.

Silkworm larvae, collected from Guangdong Academy of Agricultural Sciences (GDAAS), were cleaned, processed by hot water, dried at 70°C, crushed, added to n-hexane of 10 times as heavy as the larvae, extracted at room temperature for 6 hours under nitrogen atmosphere, and then filtered. The filtrate was evaporated under reduced pressure to recover the solvent and to get silkworm oil with low acid value.

The obtained silkworm oil was mixed with ethanol at a molar ratio of 1:7. The resulted mixture was then added to metallic sodium with a weight of 0.5% of the silkworm oil, heating refluxed at 70°C for 40min, and then stood for stratification. The subnatant liquid was neutralized by dilute hydrochloric acid, centrifuged, and evaporated under reduced pressure to get a by-product - glycerol. The supernatant liquid was washed 2-3 times with hot water, added to attapulgite with a weight of 1% of the liquid, heated to 30°C, stirred for 60min, and then suction filtered to obtain the filtrate as the product biodiesel.

### Example 12

The preparation method of biodiesel according to this example includes the steps as follows.

Fly pupae, collected from Institute of Entomology, Sun Yat-sen University, were cleaned, processed by hot water, dried at 100°C, crushed, added to ethyl ether solvent as heavy as the pupae, extracted at room temperature for 8 hours under nitrogen atmosphere, and then filtered. The filtrate was evaporated under reduced pressure to recover the solvent and to obtain fly pupa oil with low acid value.

The obtained fly pupa oil was mixed with methanol at a molar ratio of 1:4. The resulted mixture was then added to NaOH with a weight of 1% of the oil, heating refluxed at 60°C for 10min, and then stood for stratification. The supernatant liquid was refined by molecular distillation technology with processing conditions of a vacuum of 5Pa and a distillation temperature of 150°C to separate out the biodiesel.

### Example 13

The preparation method of biodiesel according to this example includes the steps as follows.

Larvae of the yellow mealworms, collected from Shengda Tenebrio Breeding Base in Huizhou, Guangdong Province, were cleaned, processed by hot water, naturally dried, crushed, added to ethyl acetate of 10 times as heavy as the larvae, extracted at room temperature for 25 hours, and then filtered. The filtrate was evaporated under reduced pressure to recover the solvent and to obtain yellow mealworm oil with high acid value. A mixture of the obtained oil and methanol mixed at a molar ratio of 1:10 was heating refluxed at 80°C, added p-toluene sulfonic acid with a weight of 5% of the oil, and stirred. Then, after 0.5 hour reaction, yellow mealworm oil with low acid value was obtained.

The obtained yellow mealworm oil was mixed with methanol at a molar ratio of 1:7. The resulted mixture was then added to KOH with a weight of 2% of the oil, heating refluxed at 65°C for 30min, and then stood for stratification. The supernatant liquid was refined by molecular distillation technology with processing conditions of a vacuum of 10Pa and a distillation temperature of 160°C to separate out the biodiesel.

### Example 14

The preparation method of biodiesel according to this example includes the steps as follows.

Larvae of the yellow mealworms, collected from a Breeding Base in Yangjiang, Guangdong Province, were cleaned, processed by limewater, naturally dried, crushed, added to n-hexane-ethanol as heavy as the larvae, extracted at room temperature for 40 hours, and then filtered. The filtrate was evaporated under reduced pressure to recover the solvent and to get yellow mealworm oil with high acid value greater than 2. A mixture of the obtained oil and methanol mixed at a molar ratio of 1:6 was heating refluxed at 70°C, added to concentrated sulfuric acid with a weight of 0.5% of the oil, and then stirred for reaction for 2 hours to obtain yellow mealworm oil with low acid value.

The obtained yellow mealworm oil was mixed with methanol at a molar ratio of 1:9. The resulted mixture was then added to NaOH with a weight of 1.5% of the oil, heating refluxed at 70°C for 60min, and then stood for stratification. The subnatant liquid was neutralized by dilute hydrochloric acid, centrifuged, and evaporated under reduced pressure to get a by-product glycerol. The supernatant liquid was washed 2-3 times with hot water, added to attapulgite-activated carbon with a weight of 5% of the liquid, heated to 60°C , stirred for 30min, and then suction filtered to obtain the filtrate as the product biodiesel.

### Example 15

The preparation method of biodiesel according to this example includes the steps as follows.

Larvae of the yellow mealworms, collected from an Artificial Breeding Base in Panyu District, Guangzhou, were cleaned, processed by hot water, naturally dried, crushed, added to petroleum ether-methanol of 10 times as heavy as the larvae, extracted at room temperature for 36 hours, and then filtered. The filtrate was evaporated under reduced pressure to recover the solvent and to get yellow mealworm oil with high acid value. A mixture of the obtained oil and methanol mixed at a molar ratio of 1:9 was heating refluxed at 55°C, added to concentrated sulfuric acid with a weight of 1.5% of the oil, and then stirred for reaction for 1.5 hours to obtain yellow mealworm oil with low acid value.

The obtained yellow mealworm oil with low acid value was mixed with methanol at a molar ratio of 1:7. The resulted mixture was then added to KOH with a weight of 1.5% of the oil, heating refluxed at 60°C for 30min, and then stood for stratification. The subnatant liquid was neutralized by dilute hydrochloric acid, centrifuged, and evaporated under reduced pressure to get a by-product - glycerol. The supernatant liquid was washed 2-3 times with hot water, added to activated carbon with a weight of 5% of the liquid, heated to 80°C , stirred for 30min, cooled, held in a refrigerator of 5°C for 72 hours, and then suction filtered to obtain the filtrate as the product biodiesel.

### Example 16

The preparation method of biodiesel according to this example includes the steps as follows.

Larvae of the yellow mealworms, collected from Fangcun flowers and birds market in Guangzhou, were processed by limewater, dried at 100°C, crushed, added to n-hexane-methanol of 8 times as heavy as the larvae, extracted at room temperature for 25 hours, and then filtered. The filtrate was evaporated under reduced pressure to recover the solvent and to get yellow mealworm oil with high acid value. A mixture of the obtained oil and ethanol mixed at a molar ratio of 1:10 was heating refluxed at 80°C, added to p-toluene sulfonic acid with a weight of 5% of the oil, and stirred for reaction for 0.5 hour. Then the reactant mixture was evaporated under atmospheric pressure to recover ethanol, and the residue was stood for stratification. Finally, the subnatant liquid, i.e. yellow mealworm oil with low acid value, was poured out.

The obtained yellow mealworm oil with low acid value was mixed with ethanol at a molar ratio of 1:6. The resulted mixture was then added to KOH with a weight of 1.5% of the oil, heating refluxed at 80°C for 30min, and then molecularly distilled for the separation and purification of the reactant. The molecular distillation procedure consisted of two stages, wherein the first stage of the molecular distillation has the processing conditions of a vacuum of 100Pa and a distillation temperature of 160°C, glycerol and ethanol were separated out in this stage; the second stage of the molecular distillation has the processing conditions of a vacuum of 10Pa and a distillation temperature of 200°C, and biodiesel was separated out in this stage.

### Example 17

The preparation method of biodiesel according to this example includes the steps as follows.

Pupae of the yellow mealworms, collected from Guangzhou Yellow Mealworm Breeding Base, were cleaned, processed by limewater, naturally dried, crushed, added to n-hexane-ethanol of 5 times as heavy as the pupae, extracted at room temperature for 24 hours under nitrogen atmosphere, and then filtered. The filtrate was evaporated under reduced pressure to recover the solvent and to get pupa oil with low acid value.

The obtained pupa oil was mixed with methanol at a molar ratio of 1:8. The resulted mixture was then added to NaOH with a weight of 1.5% of the oil, heating refluxed at 60°C for 50min, and stood for stratification. The supernatant liquid was refined by molecular distillation technology with processing conditions of a vacuum of 5Pa and a distillation temperature of 150°C to separate out the biodiesel.

### Example 18

The preparation method of biodiesel according to this example includes the steps as follows.

Pupae of the moths, collected from Institute of Entomology, Sun Yat-sen University, were cleaned, processed by limewater, dried at 80°C, crushed, added to n-hexane of 10 times as heavy as the pupae, extracted at room temperature for 20 hours under nitrogen atmosphere, and then filtered. The filtrate was evaporated under reduced pressure to recover the solvent and to obtain moth pupa oil with low acid value.

The obtained moth pupa oil was mixed with methanol at a molar ratio of 1:7. The resulted mixture was then added to NaOH with a weight of 1.5% of the oil, heating refluxed at 70°C for 60min, and then stood for stratification. The subnatant liquid was neutralized by dilute hydrochloric acid, centrifuged, and evaporated under reduced pressure to get a by-product glycerol. The supernatant liquid was washed 2-3 times with hot water, added to attapulgite-activated carbon with a weight of 5% of the liquid, heated to 80°C, stirred for 30min, and then suction filtered to obtain the filtrate as the product biodiesel.

### Example 19

The preparation method of biodiesel according to this example includes the steps as follows.

Larvae of the superworms, collected from Fangcun flowers and birds market in Guangzhou, were cleaned, naturally dried, crushed, added to cyclohexane-acetone of 5 times as heavy as the larvae, extracted at room temperature for 2 hours, and then filtered. The filtrate was evaporated under reduced pressure to recover the solvent and to get superworm oil with high acid value. A mixture of the obtained oil and methanol mixed at a molar ratio of 1:8 was heating refluxed at 55°C, added to concentrated sulfuric acid with a weight of 0.5% of the oil, and stirred for reaction for 2.5 hours to obtain superworm oil with low acid value.

The obtained superworm oil with low acid value was mixed with methanol at a molar ratio of 1:9. The resulted mixture was then added to NaOH with a weight of 2.5% of the oil, heating refluxed at 50°C for 60min, and then stood for stratification. The subnatant liquid was neutralized by dilute hydrochloric acid, centrifuged, and evaporated under reduced pressure to get a by-product - glycerol. The supernatant liquid was washed 2-3 times with hot water, added to alumina with a weight of 5% of the liquid, heated to 60°C, stirred for 40min, and then suction filtered to obtain the filtrate as the product biodiesel.

### Example 20

The preparation method of biodiesel according to this example includes the steps as follows.

Larvae of the superworms, collected from Fangcun flowers and birds market in Guangzhou, were cleaned, processed by hot water, naturally dried, crushed, added to benzene-ethanol of 5 times as heavy as the larvae, extracted at room temperature for 15 hours, and then filtered. The filtrate was evaporated under reduced pressure to recover the solvent and to get superworm oil with high acid value. A mixture of the obtained oil and methanol mixed at a molar ratio of 1:11 was heating refluxed at 65°C, added to p-toluene sulfonic acid with a weight of 3% of the oil, and stirred for reaction for 4 hours to obtain superworm oil with low acid value.

The obtained superworm oil with low acid value was mixed with methanol at a molar ratio of 1:5. The resulted mixture was then added to metallic sodium with a weight of 1% of the oil, heating refluxed at 65°C for 20min, and then stood for stratification. The subnatant liquid was neutralized by dilute hydrochloric acid, centrifuged, and evaporated under reduced pressure to get a by-product - glycerol. The supernatant liquid was washed 2-3 times with hot water, added to magnesium silicate with a weight of 1% of the liquid, heated to 70°C, stirred for 10min, and then suction filtered to obtain the filtrate as the product biodiesel.

### Example 21

The preparation method of biodiesel according to this example includes the steps as follows.

Larvae of the superworms, collected from Institute of Entomology, Sun Yat-sen

University, were crushed, added to petroleum ether-chloroform-acetone of 3 times as heavy as the larvae, extracted at room temperature for 24 hours, and then filtered. The filtrate was evaporated under reduced pressure to recover the solvent and to get superworm oil with high acid value. A mixture of the obtained oil and ethanol mixed at a molar ratio of 1:6 was heating refluxed at 85°C, added to p-toluene sulfonic acid with a weight of 5% of the oil, and stirred for reaction for 2.5 hours. Then the reactant mixture was evaporated under atmospheric pressure to recover ethanol, and the residue was stood for stratification. Finally, the subnatant liquid, i.e. superworm oil with low acid value, was poured out.

The obtained superworm oil was mixed with ethanol at a molar ratio of 1:8. The resulted mixture was then added to NaOH with a weight of 1% of the oil, heating refluxed at 75°C for 50min, and then molecularly distilled for the separation and purification of the reactant. The molecular distillation procedure consisted of three stages, wherein the first stage of the molecular distillation has the processing conditions of a vacuum of 300Pa and a distillation temperature of 70°C; the second stage of the molecular distillation has the processing conditions of a vacuum of 50Pa and a distillation temperature of 110°C, in this stage glycerol was separated out; and the third stage of the molecular distillation has the processing conditions of a vacuum of 1Pa and a distillation temperature of 140°C, and biodiesel was separated out in this stage.

### Example 22

The preparation method of biodiesel according to this example includes the steps as follows.

Pupae of the superworms, collected from a Breeding Base in Dongguan, Guangdong Province, were cleaned, naturally dried, crushed, added to n-hexane-acetone of 5 times as heavy as the pupae, extracted at room temperature for 2 hours, and then filtered. The filtrate was evaporated under reduced pressure to recover the solvent and to get superworm pupa oil with high acid value. A mixture of the obtained oil and methanol mixed at a molar ratio of 1:9 was heating refluxed at 60°C, added to concentrated sulfuric acid with a weight of 2% of the oil, and stirred for reaction for 2.5 hours to get superworm pupa oil with low acid value.

The obtained superworm pupa oil with low acid value was mixed with methanol at a molar ratio of 1:10. The resulted mixture was then added to NaOH with a weight of 2.5% of the oil, heating refluxed at 50°C for 60min, and then stood for stratification. The subnatant liquid was neutralized by dilute hydrochloric acid, centrifuged, and evaporated under reduced pressure to get a by-product - glycerol. The supernatant liquid was washed 2-3 times with hot water, added to activated carbon with a weight of 5% of the liquid, heated to 100°C, stirred for 40min, and then suction filtered to obtain the filtrate as the product biodiesel.

### Example 23

The preparation method of biodiesel according to this example includes the steps as follows.

Pupae of the moths, collected from a Breeding Base in Panyu District, Guangzhou, were cleaned, processed by limewater, dried at 70°C, crushed, added to petroleum ether-acetone of 5 times as heavy as the pupae, extracted at room temperature for 15 hours under nitrogen atmosphere, and then filtered. The filtrate was evaporated under reduced pressure to recover the solvent and to obtain moth pupa oil with low acid value.

The obtained moth pupa oil was mixed with methanol at a molar ratio of 1:8. The resulted mixture was then added to NaOH with a weight of 1.5% of the oil, heating refluxed at 60°C for 50min, and then stood for stratification. The supernatant liquid was refined by molecular distillation technology with processing conditions of a vacuum of 2Pa and a distillation temperature of 120°C to separate out the biodiesel.

### Example 24

The preparation method of biodiesel according to this example includes the steps as follows.

Larvae of the moths, collected from Guangdong Academy of Agricultural Sciences (GDAAS), were cleaned, naturally dried, crushed, added to ethyl acetate of 3 times as heavy as the larvae, extracted at room temperature for 36 hours under nitrogen atmosphere, and then filtered. The filtrate was evaporated under reduced pressure to recover the solvent and to get moth larva oil with low acid value.

The obtained moth larva oil was mixed with methanol at a molar ratio of 1:9. The resulted mixture was then added to KOH with a weight of 2.5% of the oil, heating refluxed at 70°C for 40min, and then stood for stratification. The subnatant liquid was neutralized by dilute hydrochloric acid, centrifuged, and evaporated under reduced pressure to get a by-product glycerol. The supernatant liquid was washed 2-3 times with hot water, added to magnesium silicate-activated carbon with a weight of 5% of the liquid, heated to 70°C, stirred for 30min, and then suction filtered to obtain the filtrate as the product biodiesel.

### Example 25

The preparation method of biodiesel according to this example includes the steps as follows.

Larvae of the moths, collected from Institute of Entomology, Sun Yat-sen University, were cleaned, processed by hot water, naturally dried, crushed, added to ethyl acetate of 8 times as heavy as the larvae, extracted at room temperature for 30 hours, and then filtered. The filtrate was evaporated under reduced pressure to recover the solvent and to get moth larva oil with high acid value. A mixture of the obtained oil and methanol mixed at a molar ratio of 1:10 was heating refluxed at 80°C, added to p-toluene sulfonic acid with a weight of 5% of the oil, and stirred for reaction for 3.5 hours to obtain moth larva oil with low acid value.

The obtained moth larva oil was mixed with methanol at a molar ratio of 1:7. The resulted mixture was then added to KOH with a weight of 2% of the oil, heating refluxed at 65°C for 30min, and then stood for stratification. The supernatant liquid was refined by molecular distillation technology with processing conditions of a vacuum of 10Pa and a distillation temperature of 160°C to separate out the biodiesel.

### Example 26

The preparation method of biodiesel according to this example includes the steps as follows.

Larvae of the silkworms, collected from GuangDong Tincan Sericulture Co., Ltd., were cleaned, processed by limewater, dried at 80°C, crushed, added to benzene as heavy as the larvae, extracted at room temperature for 12 hours under nitrogen atmosphere, and then filtered. The filtrate was evaporated under reduced pressure to recover the solvent and to obtain silkworm larva oil with low acid value.

The obtained silkworm oil was mixed with ethanol at a molar ratio of 1:9. The resulted mixture was then added to KOH with a weight of 1.5% of the oil, heating refluxed at 40°C for 40min, and then molecularly distilled for the separation and purification of the reactant. The molecular distillation procedure consisted of two stages, wherein the first stage of the molecular distillation has the processing conditions of a vacuum of 10Pa and a distillation temperature of 80°C, glycerol and ethanol were separated out in this stage; the second stage of the molecular distillation has the processing conditions of a vacuum of 0.1Pa and a distillation temperature of 100°C, and biodiesel was separated out in this stage.

### Example 27

The preparation method of biodiesel according to this example includes the steps as follows.

Silkworm pupae, collected from GuangDong Tincan Sericulture Co., Ltd., were cleaned, processed by limewater, dried at 80°C, crushed, added to ethyl ether of 10 times as heavy as the pupae, extracted at room temperature for 10 hours under nitrogen atmosphere, and then filtered. The filtrate was evaporated under reduced pressure to recover the solvent and to get silkworm pupa oil with low acid value.

The obtained silkworm pupa oil was mixed with methanol at a molar ratio of 1:5. The resulted mixture was then added to sodium methoxide with a weight of 2.5% of the oil, heating refluxed at 70°C for 30min, and then stood for stratification. The subnatant liquid was neutralized by dilute hydrochloric acid, centrifuged, and evaporated under reduced pressure to get a by-product - glycerol. The supernatant liquid was washed 2-3 times with hot water, added to attapulgite-magnesium silicate with a weight of 6% of the liquid, heated to 60°C, stirred for 30min, and then suction filtered to obtain the filtrate as the product biodiesel.

### Example 28

The preparation method of biodiesel according to this example includes the steps as follows.

Silkworm pupae, collected from Guangdong Academy of Agricultural Sciences (GDAAS), were cleaned, processed by hot water, dried at 50°C, crushed, added to cyclohexane as heavy as the pupae, extracted at room temperature for 15 hours under nitrogen atmosphere, and then filtered. The filtrate was evaporated under reduced pressure to recover the solvent and to obtain silkworm pupa oil with low acid value.

The obtained silkworm pupa oil was mixed with methanol at a molar ratio of 1:6. The resulted mixture was then added to NaOH with a weight of 2% of the oil, heating refluxed at 70°C for 30min, and then stood for stratification. The supernatant liquid was refined by molecular distillation technology with processing conditions of a vacuum of 8Pa and a distillation temperature of 130°C to separate out the biodiesel.

### Example 29

The preparation method of biodiesel according to this example includes the steps as follows.

Bee pupae, collected from Guangzhou Baiyun Mountain Apiary, were cleaned, processed by limewater, dried at 80°C, crushed, added to chloroform of 10 times as heavy as the pupae, extracted at room temperature for 20 hours under nitrogen atmosphere, and then filtered. The filtrate was evaporated under reduced pressure to recover the solvent and to obtain bee pupa oil with low acid value.

The obtained bee pupa oil was mixed with methanol at a molar ratio of 1:9. The resulted mixture was then added to NaOH with a weight of 1.5% of the oil, heating refluxed at 70°C for 60min, and then stood for stratification. The subnatant liquid was neutralized by dilute hydrochloric acid, centrifuged, and evaporated under reduced pressure to get a by-product glycerol. The supernatant liquid was washed 2-3 times with hot water, added to activated clay-activated carbon with a weight of 5% of the liquid, heated to 80°C, stirred for 30min, and then suction filtered to obtain the filtrate as the product biodiesel.

### Example 30

The preparation method of biodiesel according to this example includes the steps as follows.

Bee pupae, collected from South China Botanical Garden in Guangzhou, were cleaned, naturally dried, crushed, added to ethyl acetate as heavy as the pupae, extracted at room temperature for 36 hours under nitrogen atmosphere, and then filtered. The filtrate was evaporated under reduced pressure to recover the solvent and to get bee pupa oil with low acid value.

The obtained bee pupa oil was mixed with methanol at a molar ratio of 1:9. The resulted mixture was then added to sodium methoxide with a weight of 0.5% of the oil, heating refluxed at 70°C for 40min, and then stood for stratification. The subnatant liquid was neutralized by dilute hydrochloric acid, centrifuged, and evaporated under reduced pressure to get a by-product glycerol. The supernatant liquid was washed 2-3 times with hot water, added to activated carbon-alumina with a weight of 5% of the liquid, heated to 40°C, stirred for 20min, and then suction filtered to obtain the filtrate as the product biodiesel.

## Claims

1. A method for preparing biodiesel, comprising the following steps:
(a)
(1) insect oil preparation:
drying and crushing larvae and/or pupae of complete metamorphosis insect, adding a solvent of 1-10 times as heavy as the larvae and/or pupae, extracting at room temperature for 1-48 hours, filtering to obtain a filtrate, and then recovering the solvent from the filtrate to obtain a low-acid-value insect oil with an acid value less than or equal to 2, or a high-acid-value insect oil with an acid value greater than 2; when the high-acid-value insect oil is obtained, pre-esterifying the high-acid-value insect oil to get the low-acid-value insect oil with an acid value less than or equal to 2 with processing conditions of a molar ratio of 1:6 - 1:13 of the high-acid-value insect oil to methanol or ethanol, adding an acidic catalyst at a weight of0.5% - 5% as heavy as the insect oil, a reaction temperature of 40°C - 90°C, and a reaction time of 0.5 - 4 hours; wherein the solvent is a single lipophilic organic solvent, or a mixture of lipophilic organic solvent and hydrophilic organic solvent;
(2) transesterification:
conducting transesterification of the low-acid-value insect oil with methanol or ethanol with reaction conditions of a molar ratio of 1:4 - 1:9 of the low-acid-value insect oil to methanol or ethanol, adding a basic catalyst at a weight of 0.5% - 2.5% as heavy as the insect oil, a reaction temperature of 40°C - 90°C, and a reaction time of 10 - 60 minutes;
and wherein the method further comprises either step (b) or step (c):
(b)
(3) phase separation:
after the transesterification is completed, standing the reactant for stratification and then obtaining a supernatant liquid which is coarse ester;
(4) refining process:
washing the supernatant liquid obtained from the step (3) with hot water, adding an adsorbent at a weight of 1% - 10% as heavy as the supernatant liquid, heating to 30°C-100°C, stirring, and then suction filtering to get a filtrate which is the biodiesel; or
washing the supernatant liquid obtained from the step (3) with water, placing in 0°C-10°C for freezing for 24-120 hours, and then suction filtering to get a filtrate which is the biodiesel; or
refining processing the supernatant liquid obtained from the step (3) by using molecular distillation technology with processing conditions of a vacuum of 0.1-10Pa and a distillation temperature of 100-200°C to separate out the biodiesel; or
(c)
(3) refining the reactants from the step (a)(2) with molecular distillation technology by the following two stages:
I. separating out glycerol and methanol or ethanol from the reactants by molecular distillation with processing conditions of a vacuum of 100-10Pa and a distillation temperature of 80°C -160°C, and
II. separating out biodiesel by molecular distillation with processing conditions of a vacuum of 10-0.1Pa and a distillation temperature of 100°C -200°C;
or by the following three stages:
I. separating out methanol or ethanol by molecular distillation with processing conditions of a vacuum of 5000-100Pa and a distillation temperature of 65°C -150°C,
II. separating out glycerol by molecular distillation with processing conditions of a vacuum of 100-10Pa and a distillation temperature of 100°C -200°C, and
III. separating out biodiesel by molecular distillation with processing conditions of a vacuum of 10-0.1Pa and a distillation temperature of 100°C -200°C.

2. The method for preparing biodiesel, according to Claim 1, comprising the following steps:
(1) insect oil preparation:
drying and crushing larvae and/or pupae of complete metamorphosis insect, adding a solvent of 1-10 times as heavy as the larvae and/or pupae, extracting at room temperature for 1-48 hours, filtering to obtain a filtrate, and then recovering the solvent from the filtrate to obtain a low-acid-value insect oil with an acid value less than or equal to 2, or a high-acid-value insect oil with an acid value greater than 2; when the high-acid-value insect oil is obtained, pre-esterifying the high-acid-value insect oil to get the low-acid-value insect oil with an acid value less than or equal to 2 with processing conditions of a molar ratio of 1:6 - 1:13 of the high-acid-value insect oil to methanol or ethanol, adding an acidic catalyst at a weight of0.5% - 5% as heavy as the insect oil, a reaction temperature of 40°C - 90°C, and a reaction time of 0.5 - 4 hours; wherein the solvent is a single lipophilic organic solvent, or a mixture of lipophilic organic solvent and hydrophilic organic solvent;
(2) transesterification:
conducting transesterification of the low-acid-value insect oil with methanol or ethanol with reaction conditions of a molar ratio of 1:4 - 1:9 of the low-acid-value insect oil to methanol or ethanol, adding a basic catalyst at a weight of 0.5% - 2.5% as heavy as the insect oil, a reaction temperature of 40°C - 90°C, and a reaction time of 10 - 60 minutes;
(3) phase separation:
after the transesterification is completed, standing the reactant for stratification and then obtaining a supernatant liquid which is coarse ester;
(4) refining process:
washing the supernatant liquid obtained from the step (3) with hot water, adding an adsorbent at a weight of 1% - 10% as heavy as the supernatant liquid, heating to 30°C-100°C, stirring, and then suction filtering to get a filtrate which is the biodiesel; or
washing the supernatant liquid obtained from the step (3) with water, placing in 0°C-10°C for freezing for 24-120 hours, and then suction filtering to get a filtrate which is the biodiesel; or
refining processing the supernatant liquid obtained from the step (3) by using molecular distillation technology with processing conditions of a vacuum of 0.1-10Pa and a distillation temperature of 100-200°C to separate out the biodiesel.

3. The method according to Claim 2, wherein the complete metamorphosis insect is fly, yellow mealworm, superworm, silkworm, bee or moth.

4. The method according to Claim 2, wherein the lipophilic organic solvent is n-hexane, cyclohexane, petroleum ether, ethyl ether, ethyl acetate, chloroform or benzene; the hydrophilic organic solvent is methanol, ethanol, propanol or acetone.

5. The method according to Claim 2, wherein the extracting at room temperature is conducted under nitrogen atmosphere.

6. The method according to Claim 2, wherein the acidic catalyst is concentrated sulfuric acid or p-toluene sulfonic acid.

7. The method according to Claim 2, wherein the basic catalyst used in the step (2) is alcohol sodium, alkali metal, NaOH, or KOH

8. The method according to any one of Claims 2-7, wherein the adsorbent used in the step (4) is selected from a group consisting of activated clay, diatomite, attapulgite, activated carbon, alumina and any combination thereof.

9. The method according to Claim 2, wherein in the step (3), the subnatant liquid after stratification mainly is a mixture of glycerol, water, catalyst and methanol or ethanol, the subnatant liquid is neutralized by dilute hydrochloric acid, centrifuged, and evaporated under reduced pressure to get a by-product glycerol.

10. The method for preparing biodiesel according to Claim 1, wherein the method comprises the following steps:
(1) insect oil preparation: drying and crushing larvae or pupae of complete metamorphosis insect, adding a solvent of 1-10 times as heavy as the larvae or pupae, extracting at room temperature for 1-48 hours, filtering to obtain a filtrate, and then recovering the solvent from the filtrate to obtain a low-acid-value insect oil with an acid value less than or equal to 2, or high-acid-value insect oil with an acid value greater than 2; when the high-acid-value insect oil is obtained, pre-esterifying the high-acid-value insect oil to get the low-acid-value insect oil with an acid value less than or equal to 2 with processing conditions of a molar ratio of 1:6 - 1:13 of the high-acid-value insect oil to methanol or ethanol, adding an acidic catalyst at a weight of 0.5% - 5% as heavy as the insect oil, a reaction temperature of 40°C - 90°C, and a reaction time of 0.5 - 4 hours; wherein the solvent is a single lipophilic organic solvent, or a mixture of lipophilic organic solvent and hydrophilic organic solvent;
(2) transesterification: conducting transesterification of the low-acid-value insect oil with methanol or ethanol with reaction conditions of a molar ratio of 1:4 - 1:9 of the low-acid-value insect oil to methanol or ethanol, adding a basic catalyst at a weight of 0.5% - 2.5% as heavy as the insect oil, a reaction temperature of 40°C - 90°C, and a reaction time of 10 - 60 minutes;
(3) refining the reactants from the step (2) with molecular distillation technology by the following two stages:
III. separating out glycerol and methanol or ethanol from the reactants by molecular distillation with processing conditions of a vacuum of 100-10Pa and a distillation temperature of 80°C -160°C, and
IV. separating out biodiesel by molecular distillation with processing conditions of a vacuum of 10-0.1Pa and a distillation temperature of 100°C -200°C;
or by the following three stages:
IV. separating out methanol or ethanol by molecular distillation with processing conditions of a vacuum of 5000-100Pa and a distillation temperature of 65°C -150°C,
V. separating out glycerol by molecular distillation with processing conditions of a vacuum of 100-10Pa and a distillation temperature of 100°C -200°C, and
VI. separating out biodiesel by molecular distillation with processing conditions of a vacuum of 10-0.1Pa and a distillation temperature of 100°C -200°C.

11. The method according to Claim 10, wherein the complete metamorphosis insect is fly, yellow mealworm, superworm, silkworm, bee or moth.

12. The method according to Claim 10, wherein the lipophilic organic solvent is n-hexane, cyclohexane, petroleum ether, ethyl ether, ethyl acetate, chloroform or benzene; the hydrophilic organic solvent is methanol, ethanol, propanol or acetone.

13. The method according to Claim 10, wherein the extracting at room temperature is conducted under nitrogen atmosphere.

14. The method according to Claim 10, wherein the acidic catalyst is concentrated sulfuric acid or p-toluene sulfonic acid.

15. The method according to claim 10, wherein the basic catalyst used in the step (2) is alcohol sodium, alkali metal, NaOH, or KOH; when using NaOH or KOH as catalyst, the catalyst in solid state is firstly dissolved in methanol or ethanol respectively to get an alcohol solution with a base concentration of 4-8wt%.

## Patentansprüche

1. Verfahren zur Herstellung von Biodiesel, umfassend die folgenden Schritte:
(a)
(1) Herstellung von Insektenöl:
das Trocknen und Zerkleinern von Larven und/oder Puppen eines Insekts, das eine vollständige Metamorphose durchläuft, das Zugeben eines Lösungsmittels in einer Menge, die das 1- bis 10-fache des Gewichts der Larven und/oder Puppen ausmacht, das Extrahieren bei Raumtemperatur für 1 bis 48 Stunden, das Filtrieren zum Erhalt eines Filtrats sowie das anschließende Rückgewinnen des Lösungsmittels aus dem Filtrat zum Erhalt eines Insektenöls mit einer niedrigen Säurezahl von weniger oder gleich 2, oder eines Insektenöls mit einer hohen Säurezahl von mehr als 2; beim Erhalt des Insektenöls mit einer hohen Säurezahl das Vorverestern des Insektenöls mit der hohen Säurezahl zum Erhalt des Insektenöls mit einer niedrigen Säurezahl von weniger oder gleich 2 unter Verarbeitungsbedingungen mit einem molaren Verhältnis von 1:6 bis 1:13 des Insektenöls mit der hohen Säurezahl zu Methanol oder Ethanol, das Zugeben eines sauren Katalysators in einem Gewichtsanteil von 0,5% bis 5% des Gewichts des Insektenöls bei einer Reaktionstemperatur von 40°C bis 90°C sowie einer Reaktionszeit von 0,5 bis 4 Stunden; wobei es sich bei dem Lösungsmittel um ein einzelnes lipophiles organisches Lösungsmittel oder ein Gemisch aus einem lipophilen organischen Lösungsmittel und einem hydrophilen organischen Lösungsmittel handelt;
(2) Transveresterung:
das Durchführen der Transveresterung des Insektenöls mit einer niedrigen Säurezahl mit Methanol oder Ethanol unter Reaktionsbedingungen mit einem molaren Verhältnis von 1:4 bis 1:9 des Insektenöls mit einer niedrigen Säurezahl zu Methanol oder Ethanol, das Zugeben eines basischen Katalysators in einem Gewichtsanteil von 0,5% bis 2,5% des Gewichts des Insektenöls bei einer Reaktionstemperatur von 40°C bis 90°C sowie einer Reaktionszeit von 10 bis 60 Minuten;
und wobei das Verfahren des Weiteren entweder Schritt (b) oder Schritt (c) umfasst:
(b)
(3) Phasentrennung:
nach dem Abschluss der Transveresterung das Ruhenlassen des Reaktanten zur Schichtenbildung sowie der anschließende Erhalt einer Überstandsflüssigkeit, bei der es sich um Rohester handelt;
(4) Raffinierungsprozess:
das Waschen der in Schritt (3) erhaltenen Überstandsflüssigkeit mit heißem Wasser, das Zugeben eines Adsorptionsmittels in einem Gewichtsanteil von 1% bis 10% des Gewichts der Überstandsflüssigkeit, das Erwärmen auf 30°C bis 100°C, das Rühren sowie das anschließende Saugfiltrieren zum Erhalt eines Filtrats, bei dem es sich um den Biodiesel handelt; oder
das Waschen der in Schritt (3) erhaltenen Überstandsflüssigkeit mit Wasser, das Aufbewahren bei Temperaturen von 0°C bis 10°C zum Einfrieren für 24 bis 120 Stunden sowie das anschließende Saugfiltrieren zum Erhalt eines Filtrats, bei dem es sich um den Biodiesel handelt; oder das Durchführen eines Raffinierungsprozesses an der in Schritt (3) erhaltenen Überstandsflüssigkeit mittels einer Technik der molekularen Destillation unter Verarbeitungsbedingungen mit einem Vakuum von 0,1 bis 10 Pa sowie einer Destillationstemperatur von 100 bis 200°C zur Absonderung des Biodiesels; oder
(c)
(3) das Raffinieren der Reaktanten aus Schritt (a) (2) mittels einer Technik der molekularen Destillation in den folgenden zwei Stufen:
I. das Absondern von Glycerol und Methanol oder Ethanol von den Reaktanten mittels molekularer Destillation unter Verarbeitungsbedingungen mit einem Vakuum von 100 bis 10 Pa sowie einer Destillationstemperatur von 80°C bis 160°C, und
II. das Absondern von Biodiesel mittels molekularer Destillation unter Verarbeitungsbedingungen mit einem Vakuum von 10 bis 0,1 Pa sowie einer Destillationstemperatur von 100°C bis 200°C;
oder in den folgenden drei Stufen:
I. das Absondern von Methanol oder Ethanol mittels molekularer Destillation unter Verarbeitungsbedingungen mit einem Vakuum von 5.000 bis 100 Pa sowie einer Destillationstemperatur von 65°C bis 150°C,
II. das Absondern von Glycerol mittels molekularer Destillation unter Verarbeitungsbedingungen mit einem Vakuum von 100 bis 10 Pa sowie einer Destillationstemperatur von 100°C bis 200°C, und
III. das Absondern von Biodiesel mittels molekularer Destillation unter Verarbeitungsbedingungen mit einem Vakuum von 10 bis 0,1 Pa sowie einer Destillationstemperatur von 100°C bis 200°C.

2. Verfahren zur Herstellung von Biodiesel nach Anspruch 1, umfassend die folgenden Schritte:
(1) Herstellung von Insektenöl:
das Trocknen und Zerkleinern von Larven und/oder Puppen eines Insekts, das eine vollständige Metamorphose durchläuft, das Zugeben eines Lösungsmittels in einer Menge, die das 1- bis 10-fache des Gewichts der Larven und/oder Puppen ausmacht, das Extrahieren bei Raumtemperatur für 1 bis 48 Stunden, das Filtrieren zum Erhalt eines Filtrats sowie das anschließende Rückgewinnen des Lösungsmittels aus dem Filtrat zum Erhalt eines Insektenöls mit einer niedrigen Säurezahl von weniger oder gleich 2, oder eines Insektenöls mit einer hohen Säurezahl von mehr als 2; beim Erhalt des Insektenöls mit einer hohen Säurezahl das Vorverestern des Insektenöls mit der hohen Säurezahl zum Erhalt des Insektenöls mit einer niedrigen Säurezahl von weniger oder gleich 2 unter Verarbeitungsbedingungen mit einem molaren Verhältnis von 1:6 bis 1:13 des Insektenöls mit der hohen Säurezahl zu Methanol oder Ethanol, das Zugeben eines sauren Katalysators in einem Gewichtsanteil von 0,5% bis 5% des Gewichts des Insektenöls bei einer Reaktionstemperatur von 40°C bis 90°C sowie einer Reaktionszeit von 0,5 bis 4 Stunden; wobei es sich bei dem Lösungsmittel um ein einzelnes lipophiles organisches Lösungsmittel oder ein Gemisch aus einem lipophilen organischen Lösungsmittel und einem hydrophilen organischen Lösungsmittel handelt;
(2) Transveresterung:
das Durchführen der Transveresterung des Insektenöls mit einer niedrigen Säurezahl mit Methanol oder Ethanol unter Reaktionsbedingungen mit einem molaren Verhältnis von 1:4 bis 1:9 des Insektenöls mit einer niedrigen Säurezahl zu Methanol oder Ethanol, das Zugeben eines basischen Katalysators in einem Gewichtsanteil von 0,5% bis 2,5% des Gewichts des Insektenöls bei einer Reaktionstemperatur von 40°C bis 90°C sowie einer Reaktionszeit von 10 bis 60 Minuten;
(3) Phasentrennung:
nach dem Abschluss der Transveresterung das Ruhenlassen des Reaktanten zur Schichtenbildung sowie der anschließende Erhalt einer Überstandsflüssigkeit, bei der es sich um Rohester handelt;
(4) Raffinierungsprozess:
das Waschen der in Schritt (3) erhaltenen Überstandsflüssigkeit mit heißem Wasser, das Zugeben eines Adsorptionsmittels in einem Gewichtsanteil von 1% bis 10% des Gewichts der Überstandsflüssigkeit, das Erwärmen auf 30°C bis 100°C, das Rühren sowie das anschließende Saugfiltrieren zum Erhalt eines Filtrats, bei dem es sich um den Biodiesel handelt; oder
das Waschen der in Schritt (3) erhaltenen Überstandsflüssigkeit mit Wasser, das Aufbewahren bei Temperaturen von 0°C bis 10°C zum Einfrieren für 24 bis 120 Stunden sowie das anschließende Saugfiltrieren zum Erhalt eines Filtrats, bei dem es sich um den Biodiesel handelt; oder
das Durchführen eines Raffinierungsprozesses an der in Schritt (3) erhaltenen Überstandsflüssigkeit mittels einer Technik der molekularen Destillation unter Verarbeitungsbedingungen mit einem Vakuum von 0,1 bis 10 Pa sowie einer Destillationstemperatur von 100 bis 200°C zur Absonderung des Biodiesels.

3. Verfahren nach Anspruch 2, wobei es sich bei dem Insekt, das die vollständige Metamorphose durchläuft, um eine Fliege, einen gemeinen Mehlwurm, eine Larve des großen Schwarzkäfers, eine Seidenraupe, eine Biene oder eine Motte handelt.

4. Verfahren nach Anspruch 2, wobei es sich bei dem lipophilen organischen Lösungsmittel um n-Hexan, Cyclohexan, Petroleumether, Ethylether, Ethylacetat, Chloroform oder Benzol; sowie bei dem hydrophilen organischen Lösungsmittel um Methanol, Ethanol, Propanol oder Aceton handelt.

5. Verfahren nach Anspruch 2, wobei das Extrahieren bei Raumtemperatur unter Stickstoffatmosphäre erfolgt.

6. Verfahren nach Anspruch 2, wobei es sich bei dem sauren Katalysator um konzentrierte Schwefelsäure oder p-Toluolsulfonsäure handelt.

7. Verfahren nach Anspruch 2, wobei es sich bei dem in Schritt (2) verwendeten basischen Katalysator um Alkohol-Natrium, ein Alkalimetall, NaOH oder KOH handelt.

8. Verfahren nach einem der Ansprüche 2 bis 7, wobei das in Schritt (4) verwendete Adsorptionsmittel ausgewählt ist aus der Gruppe bestehend aus aktiviertem Ton, Diatomit, Attapulgit, Aktivkohle, Tonerde und einer beliebigen Kombination aus diesen.

9. Verfahren nach Anspruch 2, wobei es sich in Schritt (3) bei der nach der Schichtenbildung vorliegenden Überstandsflüssigkeit im Wesentlichen um ein Gemisch aus Glycerol, Wasser, Katalysator und Methanol oder Ethanol handelt, die Überstandsflüssigkeit mit verdünnter Salzsäure neutralisiert, zentrifugiert und unter reduziertem Druck verdampft wird, wodurch Glycerol als Nebenprodukt erhalten wird.

10. Verfahren zur Herstellung von Biodiesel nach Anspruch 1, wobei das Verfahren im Wesentlichen die folgenden Schritte umfasst:
(1) Herstellung von Insektenöl: das Trocknen und Zerkleinern von Larven und/oder Puppen eines Insekts, das eine vollständige Metamorphose durchläuft, das Zugeben eines Lösungsmittels in einer Menge, die das 1- bis 10-fache des Gewichts der Larven und/oder Puppen ausmacht, das Extrahieren bei Raumtemperatur für 1 bis 48 Stunden, das Filtrieren zum Erhalt eines Filtrats sowie das anschließende Rückgewinnen des Lösungsmittels aus dem Filtrat zum Erhalt eines Insektenöls mit einer niedrigen Säurezahl von weniger oder gleich 2, oder eines Insektenöls mit einer hohen Säurezahl von mehr als 2; beim Erhalt des Insektenöls mit einer hohen Säurezahl das Vorverestern des Insektenöls mit der hohen Säurezahl zum Erhalt des Insektenöls mit einer niedrigen Säurezahl von weniger oder gleich 2 unter Verarbeitungsbedingungen mit einem molaren Verhältnis von 1:6 bis 1:13 des Insektenöls mit der hohen Säurezahl zu Methanol oder Ethanol, das Zugeben eines sauren Katalysators in einem Gewichtsanteil von 0,5% bis 5% des Gewichts des Insektenöls bei einer Reaktionstemperatur von 40°C bis 90°C sowie einer Reaktionszeit von 0,5 bis 4 Stunden; wobei es sich bei dem Lösungsmittel um ein einzelnes lipophiles organisches Lösungsmittel oder ein Gemisch aus einem lipophilen organischen Lösungsmittel und einem hydrophilen organischen Lösungsmittel handelt;
(2) Transveresterung: das Durchführen der Transveresterung des Insektenöls mit einer niedrigen Säurezahl mit Methanol oder Ethanol unter Reaktionsbedingungen mit einem molaren Verhältnis von 1:4 bis 1:9 des Insektenöls mit einer niedrigen Säurezahl zu Methanol oder Ethanol, das Zugeben eines basischen Katalysators in einem Gewichtsanteil von 0,5% bis 2,5% des Gewichts des Insektenöls bei einer Reaktionstemperatur von 40°C bis 90°C sowie einer Reaktionszeit von 10 bis 60 Minuten;
(3) das Raffinieren der Reaktanten aus Schritt (2) mittels einer Technik der molekularen Destillation in den folgenden zwei Stufen:
III. das Absondern von Glycerol und Methanol oder Ethanol von den Reaktanten mittels molekularer Destillation unter Verarbeitungsbedingungen mit einem Vakuum von 100 bis 10 Pa sowie einer Destillationstemperatur von 80°C bis 160°C, und
IV. das Absondern von Biodiesel mittels molekularer Destillation unter Verarbeitungsbedingungen mit einem Vakuum von 10 bis 0,1 Pa sowie einer Destillationstemperatur von 100°C bis 200°C;
oder in den folgenden drei Stufen:
IV. das Absondern von Methanol oder Ethanol mittels molekularer Destillation unter Verarbeitungsbedingungen mit einem Vakuum von 5.000 bis 100 Pa sowie einer Destillationstemperatur von 65°C bis 150°C,
V. das Absondern von Glycerol mittels molekularer Destillation unter Verarbeitungsbedingungen mit einem Vakuum von 100 bis 10 Pa sowie einer Destillationstemperatur von 100°C bis 200°C, und
VI. das Absondern von Biodiesel mittels molekularer Destillation unter Verarbeitungsbedingungen mit einem Vakuum von 10 bis 0,1 Pa sowie einer Destillationstemperatur von 100°C bis 200°C.

11. Verfahren nach Anspruch 10, wobei es sich bei dem Insekt, das die vollständige Metamorphose durchläuft, um eine Fliege, einen gemeinen Mehlwurm, eine Larve des großen Schwarzkäfers, eine Seidenraupe, eine Biene oder eine Motte handelt.

12. Verfahren nach Anspruch 10, wobei es sich bei dem lipophilen organischen Lösungsmittel um n-Hexan, Cyclohexan, Petroleumether, Ethylether, Ethylacetat, Chloroform oder Benzol; sowie bei dem hydrophilen organischen Lösungsmittel um Methanol, Ethanol, Propanol oder Aceton handelt.

13. Verfahren nach Anspruch 10, wobei das Extrahieren bei Raumtemperatur unter Stickstoffatmosphäre erfolgt.

14. Verfahren nach Anspruch 10, wobei es sich bei dem sauren Katalysator um konzentrierte Schwefelsäure oder p-Toluolsulfonsäure handelt.

15. Verfahren nach Anspruch 10, wobei es sich bei dem in Schritt (2) verwendeten basischen Katalysator um Alkohol-Natrium, ein Alkalimetall, NaOH oder KOH handelt; wobei bei der Verwendung von NaOH oder KOH als Katalysator der im festen Zustand vorliegende Katalysator zunächst in Methanol bzw. Ethanol gelöst wird, wodurch eine Alkohollösung mit einer Basenkonzentration von 4 bis 8 Gewichts-% erhalten wird.

## Revendications

1. Procédé pour préparer du biogazole, comprenant les étapes consistant à :
(a)
(1) préparation d'huile à base d'insectes :
sécher et broyer de larves et/ou des nymphes d'insectes ayant achevé leur métamorphose, ajouter un solvant de 1 à 10 fois aussi lourd que les larves et/ou les nymphes, extraire à température ambiante pendant 1 à 48 heures, filtrer pour obtenir un filtrat, et ensuite récupérer le solvant du filtrat pour obtenir une huile à base d'insectes à faible indice d'acide ayant un indice d'acide inférieur ou égal à 2, ou une huile à base d'insectes à fort indice d'acide ayant un indice d'acide supérieur à 2 ; lorsque l'huile à base d'insectes à fort indice d'acide est obtenue, pré-estérifier l'huile à base d'insectes à fort indice d'acide pour obtenir l'huile à base d'insectes à faible indice d'acide ayant un indice d'acide inférieur ou égal à 2 avec des conditions de traitement d'un rapport molaire de 1:6 à 1:13 de l'huile à base d'insectes à fort indice d'acide sur du méthanol ou de l'éthanol, ajouter un catalyseur acide à un poids de 0,5 % à 5 % aussi lourd que l'huile à base d'insectes, une température de réaction de 40 °C à 90 °C, et un temps de réaction de 0,5 à 4 heures ; dans lequel le solvant est un solvant organique lipophile simple, ou un mélange de solvant organique lipophile et de solvant organique hydrophile ;
(2) transestérification :
conduire une transestérification de l'huile à base d'insectes à faible indice d'acide avec du méthanol ou de l'éthanol avec des conditions de réaction d'un rapport molaire de 1:4 à 1:9 de l'huile à base d'insectes à faible indice d'acide sur du méthanol ou de l'éthanol, ajouter un catalyseur basique à un poids de 0,5 % à 2,5 % aussi lourd que l'huile à base d'insectes, une température de réaction de 40 °C à 90 °C, et un temps de réaction de 10 à 60 minutes ;
et dans lequel le procédé comprend en outre soit une étape (b) soit une étape (c) :
(b)
(3) séparation de phase :
après que la transestérification est achevée, laisser reposer le réactif pour la stratification et obtenir ensuite un liquide surnageant qui est un ester grossier ;
(4) processus de raffinage :
laver le liquide surnageant obtenu en provenance de l'étape (3) avec de l'eau chaude, ajouter un adsorbant à un poids de 1 % à 10 % aussi lourd que le liquide surnageant, chauffer à 30 °C à 100 °C, agiter et ensuite filtrer par aspiration pour obtenir un filtrat qui est le biogazole ; ou
laver le liquide surnageant obtenu en provenance de l'étape (3) avec de l'eau, placer à 0 °C à 10 °C pour congélation pendant 24 à 120 heures, et ensuite filtrer par aspiration pour obtenir un filtrat qui est le biogazole ; ou
traiter par raffinage le liquide surnageant obtenu en provenance de l'étape (3) en utilisant une technologie de distillation moléculaire avec des conditions de traitement d'un vide de 0,1 à 10 Pa et une température de distillation de 100 à 200 °C pour séparer le biogazole ; ou
(c)
(3) raffinage des réactifs en provenance de l'étape (a) (2) avec une technologie de distillation moléculaire par les deux phases suivantes :
I. séparation du glycérol et du méthanol ou de l'éthanol des réactifs par distillation moléculaire avec des conditions de traitement d'un vide de 100 à 10 Pa et une température de distillation de 80 °C à 160 °C, et
II. séparation du biogazole par distillation moléculaire avec des conditions de traitement d'un vide de 10 à 0,1 Pa et une température de distillation de 100 °C à 200 °C ;
ou par les trois phases suivantes :
I. séparation du méthanol ou de l'éthanol par distillation moléculaire avec des conditions de traitement d'un vide de 5 000 à 100 Pa et une température de distillation de 65 °C à 150 °C,
II. séparation du glycérol par distillation moléculaire avec des conditions de traitement d'un vide de 100 à 10 Pa et une température de distillation de 100 °C à 200 °C, et
III. séparation du biogazole par distillation moléculaire avec des conditions de traitement d'un vide de 10 à 0,1 Pa et une température de distillation de 100 °C à 200 °C.

2. Procédé pour préparer du biogazole selon la revendication 1, comprenant les étapes consistant à :
(1) préparation d'huile à base d'insectes :
sécher et broyer de larves et/ou des nymphes d'insectes ayant achevé leur métamorphose, ajouter un solvant de 1 à 10 fois aussi lourd que les larves et/ou les nymphes, extraire à température ambiante pendant 1 à 48 heures, filtrer pour obtenir un filtrat, et ensuite récupérer le solvant du filtrat pour obtenir une huile à base d'insectes à faible indice d'acide ayant un indice d'acide inférieur ou égal à 2, ou une huile à base d'insectes à fort indice d'acide ayant un indice d'acide supérieur à 2 ; lorsque l'huile à base d'insectes à fort indice d'acide est obtenue, pré-estérifier l'huile à base d'insectes à fort indice d'acide pour obtenir l'huile à base d'insectes à faible indice d'acide ayant un indice d'acide inférieur ou égal à 2 avec des conditions de traitement d'un rapport molaire de 1:6 à 1:13 de l'huile à base d'insectes à fort indice d'acide sur du méthanol ou de l'éthanol, ajouter un catalyseur acide à un poids de 0,5 % à 5 % aussi lourd que l'huile à base d'insectes, une température de réaction de 40 °C à 90 °C, et un temps de réaction de 0,5 à 4 heures ; dans lequel le solvant est un solvant organique lipophile simple, ou un mélange de solvant organique lipophile et de solvant organique hydrophile ;
(2) transestérification :
conduire une transestérification de l'huile à base d'insectes à faible indice d'acide avec du méthanol ou de l'éthanol avec des conditions de réaction d'un rapport molaire de 1:4 à 1:9 de l'huile à base d'insectes à faible indice d'acide sur du méthanol ou de l'éthanol, ajouter un catalyseur basique à un poids de 0,5 % à 2,5 % aussi lourd que l'huile à base d'insectes, une température de réaction de 40 °C à 90 °C, et un temps de réaction de 10 à 60 minutes ;
(3) séparation de phase :
après que la transestérification est achevée, laisser reposer le réactif pour la stratification et obtenir ensuite un liquide surnageant qui est un ester grossier ;
(4) processus de raffinage :
laver le liquide surnageant obtenu en provenance de l'étape (3) avec de l'eau chaude, ajouter un adsorbant à un poids de 1 % à 10 % aussi lourd que le liquide surnageant, chauffer à 30 °C à 100 °C, agiter et ensuite filtrer par aspiration pour obtenir un filtrat qui est le biogazole ; ou
laver le liquide surnageant obtenu en provenance de l'étape (3) avec de l'eau, placer à 0 °C à 10 °C pour congélation pendant 24 à 120 heures, et ensuite filtrer par aspiration pour obtenir un filtrat qui est le biogazole ; ou
traiter par raffinage le liquide surnageant obtenu en provenance de l'étape (3) en utilisant une technologie de distillation moléculaire avec des conditions de traitement d'un vide de 0,1 à 10 Pa et une température de distillation de 100 à 200 °C pour séparer le biogazole.

3. Procédé selon la revendication 2, dans lequel l'insecte ayant achevé sa métamorphose est une mouche, un ver de farine jaune, un super ver, un ver à soie, une abeille ou une mite.

4. Procédé selon la revendication 2, dans lequel le solvant organique lipophile est du n-hexane, du cyclohexane, de l'éther de pétrole, de l'éther d'éthyle, de l'acétate d'éthyle, du chloroforme ou du benzène ; le solvant organique hydrophile est du méthanol, de l'éthanol, du propanol ou de l'acétone.

5. Procédé selon la revendication 2, dans lequel l'extraction à température ambiante est menée sous une atmosphère d'azote.

6. Procédé selon la revendication 2, dans lequel le catalyseur acide est de l'acide sulfurique concentré ou de l'acide sulfonique p-toluène.

7. Procédé selon la revendication 2, dans lequel le catalyseur basique utilisé dans l'étape (2) est de l'alcool sodique, un métal alcalin, du NaOH, ou du KOH.

8. Procédé selon n'importe laquelle des revendications 2 à 7, dans lequel l'adsorbant utilisé dans l'étape (4) est sélectionné à partir d'un groupe constitué par de l'argile activée, de la diatomite, de l'attapulgite, du carbone activé, de l'alumine et n'importe quelle combinaison de ceux-ci.

9. Procédé selon la revendication 2, dans lequel, dans l'étape (3), le liquide sous-jacent après la stratification est principalement un mélange de glycérol, d'eau, de catalyseur et de méthanol ou d'éthanol, le liquide sous-jacent est neutralisé par de l'acide chlorhydrique dilué, centrifugé et évaporé sous pression réduite pour obtenir un glycérol formant sous-produit.

10. Procédé pour préparer du biogazole selon la revendication 1, dans lequel le procédé comprend les étapes consistant à :
(1) préparation d'huile à base d'insectes : sécher et broyer de larves ou des nymphes d'insectes ayant achevé leur métamorphose, ajouter un solvant de 1 à 10 fois aussi lourd que les larves ou les nymphes, extraire à température ambiante pendant 1 à 48 heures, filtrer pour obtenir un filtrat, et ensuite récupérer le solvant du filtrat pour obtenir une huile à base d'insectes à faible indice d'acide ayant un indice d'acide inférieur ou égal à 2, ou une huile à base d'insectes à fort indice d'acide ayant un indice d'acide supérieur à 2 ; lorsque l'huile à base d'insectes à fort indice d'acide est obtenue, pré-estérifier l'huile à base d'insectes à fort indice d'acide pour obtenir l'huile à base d'insectes à faible indice d'acide ayant un indice d'acide inférieur ou égal à 2 avec des conditions de traitement d'un rapport molaire de 1:6 à 1:13 de l'huile à base d'insectes à fort indice d'acide sur du méthanol ou de l'éthanol, ajouter un catalyseur acide à un poids de 0,5 % à 5 % aussi lourd que l'huile à base d'insectes, une température de réaction de 40 °C à 90 °C, et un temps de réaction de 0,5 à 4 heures ; dans lequel le solvant est un solvant organique lipophile simple, ou un mélange de solvant organique lipophile et de solvant organique hydrophile ;
(2) transestérification : conduire une transestérification de l'huile à base d'insectes à faible indice d'acide avec du méthanol ou de l'éthanol avec des conditions de réaction d'un rapport molaire de 1:4 à 1:9 de l'huile à base d'insectes à faible indice d'acide sur du méthanol ou de l'éthanol, ajouter un catalyseur basique à un poids de 0,5 % à 2,5 % aussi lourd que l'huile à base d'insectes, une température de réaction de 40 °C à 90 °C, et un temps de réaction de 10 à 60 minutes ;
(3) raffinage des réactifs en provenance de l'étape (2) avec une technologie de distillation moléculaire par les deux phases suivantes :
III. séparation du glycérol et du méthanol ou de l'éthanol des réactifs par distillation moléculaire avec des conditions de traitement d'un vide de 100 à 10 Pa et une température de distillation de 80 °C à 160 °C, et
IV. séparation du biogazole par distillation moléculaire avec des conditions de traitement d'un vide de 10 à 0,1 Pa et une température de distillation de 100 °C à 200 °C ;
ou par les trois phases suivantes :
IV. séparation du méthanol ou de l'éthanol par distillation moléculaire avec des conditions de traitement d'un vide de 5 000 à 100 Pa et une température de distillation de 65 °C à 150 °C,
V. séparation du glycérol par distillation moléculaire avec des conditions de traitement d'un vide de 100 à 10 Pa et une température de distillation de 100 °C à 200 °C, et
VI. séparation du biogazole par distillation moléculaire avec des conditions de traitement d'un vide de 10 à 0,1 Pa et une température de distillation de 100 °C à 200 °C.

11. Procédé selon la revendication 10, dans lequel l'insecte ayant achevé sa métamorphose est une mouche, un ver de farine jaune, un super ver, un ver à soie, une abeille ou une mite.

12. Procédé selon la Revendication 10, dans lequel le solvant organique lipophile est du n-hexane, du cyclohexane, de l'éther de pétrole, de l'éther d'éthyle, de l'acétate d'éthyle, du chloroforme ou du benzène ; le solvant organique hydrophile est du méthanol, de l'éthanol, du propanol ou de l'acétone.

13. Procédé selon la revendication 10, dans lequel l'extraction à température ambiante est conduite sous une atmosphère d'azote.

14. Procédé selon la revendication 10, dans lequel le catalyseur acide est de l'acide sulfurique concentré ou de l'acide sulfonique p-toluène.

15. Procédé selon la revendication 10, dans lequel le catalyseur basique utilisé dans l'étape (2) est de l'alcool sodique, un métal alcalin, du NaOH, ou du KOH ; lors de l'utilisation de NaOH ou de KOH comme catalyseur, le catalyseur à l'état solide est d'abord respectivement dissous dans du méthanol ou de l'éthanol pour obtenir une solution d'alcool avec une concentration de base de 4 à 8 % en poids.
